# EUROPÄISCHE PATENTANMELDUNG

(11) **EP 1 918 462 A2**
(43) Veröffentlichungstag der Anmeldung: **07.05.2008**
(21) Anmeldenummer: 07020554.7
(22) Anmeldetag: 20.10.2007
(51) Int. Cl.: E02F 9/22, F16H 61/46, B60W 10/04

(54) **Arbeitsfahrzeug mit einem Vorschubaggregat und einem Stellaggregat sowie Verfahren zum Betrieb desselben**

(30) Priorität: 02.11.2006 DE 102006051549
(71) Anmelder: Komatsu Hanomag GmbH, 30449 Hannover (DE)
(72) Erfinder: Hermanns, Jörg, 30519 Hannover (DE); Nottmeier, Cord, 31789 Hameln (DE)
(74) Vertreter: Rehberg Hüppe + Partner

(57) **Zusammenfassung**

Die Erfindung betrifft ein Arbeitsfahrzeug mit einem Vorschubaggregat (17, hydrostatisches Getriebe 33) und einem Stellaggregat (6,8, Hubaggregat 24) für ein Werkzeug (3), wobei das Vorschubaggregat und das Stellaggregat eine gemeinsame Leistungsversorgung (12) besitzen.

Erfindungsgemäß erfolgt eine Automatisierung einer "Inchfunktion" dadurch, dass die Beaufschlagung des Stellaggregats (6,8, Hubaggregat 24) überwacht wird und für ein Erkennen eines großen Leistungsbedarfs des Stellaggregats die Vorschubleistung des Vorschubaggregats (17, hydrostatisches Getriebe 33) reduziert wird.

Die Erfindung findet Einsatz insbesondere für Radlader mit einer über eine Z-Kinematik betätigten Schaufel.

## Beschreibung

### TECHNISCHES GEBIET DER ERFINDUNG

Die Erfindung betrifft ein Verfahren zum Betrieb eines Arbeitsfahrzeugs gemäß dem Oberbegriff des Anspruchs 1. Weiterhin betrifft die Erfindung ein Arbeitsfahrzeug gemäß dem Oberbegriff des Anspruchs 6.

### STAND DER TECHNIK

Aus DE 195 09 869 B4 ist ein Antriebssystem für ein Arbeitsfahrzeug wie beispielsweise einen Radlader oder einen Teleskopstapler bekannt, bei dem zwischen eine Brennkraftmaschine und Abtriebsrädern des Arbeitsfahrzeugs ein hydrostatisches Getriebe zwischengeschaltet ist. Bei einem derart gebildeten Vorschubaggregat ist eine stufenlose Veränderung des Übersetzungsverhältnisses in Abhängigkeit von einer Drehzahl der Brennkraftmaschine und eines Systemdrucks möglich. Infolge einer Druckregelung schwenkt das druckgeregelte hydrostatische Getriebe oberhalb eines eingestellten Systemdrucks zu einem maximalen Schluckvolumen. Dieses tritt beispielsweise auf, wenn ein hoher Zugkraftbedarf besteht, beispielsweise bei hoher Beschleunigung, Bergfahrt oder Füllen einer Schaufel. Bei dieser Ausgestaltung eines hydrostatischen Vorschubaggregats ist ein so genanntes Inchventil vorgesehen, welches dem Fahrer die Möglichkeit gibt, die Abhängigkeit zwischen der Drehzahl des Verbrennungsmotors und der Fahrgeschwindigkeit des Fahrzeugs zu beeinflussen. Dies soll deshalb erforderlich sein, damit bei hoher Drehzahl des Verbrennungsmotors auch eine sehr langsame Vorwärtsbewegung des Arbeitsfahrzeugs möglich ist, wenn beispielsweise für eine Zusatzhydraulik, z. B. für das Heben einer Schaufel, mehr Leistung verfügbar sein soll. Ein derartiges Inchventil wird gemäß DE 195 09 869 B4 entweder über ein eigenes, mit dem Inchventil gekoppeltes Pedal vom Fahrer des Arbeitsfahrzeugs gesteuert oder kann auch über den Druck der hydraulischen Betriebsbremse als so genanntes "hydraulisches Inchen" beaufschlagt werden. In beiden Fällen wird mit Betätigung des Inchventils der wirksame Druck an einem Servokolben und somit das Fördervolumen der Verstellpumpe des hydrostatischen Getriebes und damit die Fahrgeschwindigkeit reduziert.

DE 44 07 282 C2 beschreibt einen hydrostatischen Fahrantrieb für ein Fahrzeug, wie beispielsweise einen Stapler oder Radlader, mit einer Brennkraftmaschine, einem hydrostatischen Getriebe mit einer reversiblen Hydropumpe verstellbaren Fördervolumens sowie einem reversiblen Hydromotor verstellbaren Schluckvolumens sowie einer Regelvorrichtung zum automatischen Fahren, die ein der Drehzahl des Antriebsmotors direkt proportionales Signal erzeugt. Eine Verstellvorrichtung ist zum Verstellen des Übersetzungsverhältnisses des hydrostatischen Getriebes in Abhängigkeit von dem drehzahlproportionalen Signal vorgesehen. Eine manuell betätigbare so genannte Inchvorrichtung dient einer Abschwächung dieses Signals bei jeder beliebigen, z. B. zwecks Anheben einer Last durchgeführten, Drehzahlerhöhung des Antriebsmotors, um eine Zunahme der Fahrgeschwindigkeit infolge der Drehzahlerhöhung zu verhindern. Der Antriebsmotor ist neben dem Betrieb der Hydropumpe und des Hydromotors für den Antrieb hydraulischer Arbeitsgeräte, wie beispielsweise einer Schaufel im Falle eines Radladers, verantwortlich. Die vorgenannte Inchvorrichtung umfasst ein Inchpedal, ein mit diesem gekoppeltes Inch-Potentiometer zum Erfassen der jeweiligen Stellung des Inchpedals sowie ein Inchventil in Form eines einstellbaren Proportional-Druckventils. Wenn wegen zugeschalteter Arbeitshydraulik die Brennkraftmaschine mit höherer Drehzahl drehen soll, die Fahrzeuggeschwindigkeit jedoch nicht zunehmen oder gar bis zum Stillstand reduziert werden soll, betätigt der Fahrer das Gaspedal und gleichzeitig das Inchpedal. Entsprechend der Stellung des Inchpedals wird ein Proportionalmagnet von einem Mikroprozessor angesteuert und das Inchventil so weit geöffnet und damit der drehzahlproportionale Stelldruck in einer Stelldruckleitung und einer Steuerleitung abgebaut, wie es der Stellung des Inchpedals entspricht.

### AUFGABE DER ERFINDUNG

Der Erfindung liegt die Aufgabe zugrunde, ein Arbeitsfahrzeug und ein Verfahren zum Betrieb desselben vorzuschlagen, bei dem eine gewünschte Betätigung eines Stellaggregats für ein Werkzeug hinsichtlich
- der verfügbaren Stellleistung des Stellaggregats,
- der Komplexität der beteiligten Bauelemente und/oder
- der Bedienung durch den Fahrer des Arbeitsfahrzeugs
   verbessert ist.

### LÖSUNG

Die Aufgabe der Erfindung wird erfindungsgemäß gelöst durch ein Verfahren zum Betrieb eines Arbeitsfahrzeugs gemäß den Merkmalen des unabhängigen Patentanspruchs 1. Weitere Ausgestaltungen eines erfindungsgemäßen Verfahrens ergeben sich entsprechend den abhängigen Ansprüchen 2 bis 5. Eine weitere Lösung der der Erfindung zugrunde liegenden Aufgabe ist gegeben durch ein Arbeitsfahrzeug mit den Merkmalen des unabhängigen Patentanspruchs 6. Weitere Ausgestaltungen eines erfindungsgemäßen Arbeitsfahrzeugs sind durch die Merkmale der abhängigen Patentansprüche 7 bis 9 definiert.

### BESCHREIBUNG DER ERFINDUNG

Die vorliegende Erfindung widmet besonderes Augenmerk den Anforderungen an ein Arbeitsfahrzeug, wenn über ein Stellaggregat ein Werkzeug betätigt werden soll. Beispielsweise handelt es sich hierbei um eine Schaufel eines Arbeitsfahrzeugs wie eines Radladers, die mit einer Last, beispielsweise Sand, Boden- oder Baumaterial, angehoben werden muss.

Der Erfindung liegt die Beobachtung zugrunde, dass das Stellaggregat für das Werkzeug und das Vorschubaggregat, beispielsweise ein stufenlos verstellbares Getriebe, von einem gemeinsamen Antriebsaggregat mit Leistung versorgt werden. Dem Stand der Technik beruht hierbei auf dem Grundsatz, dass für eine Erhöhung der verfügbaren Leistung für das Stellaggregat zum Heben des Werkzeugs die bereitgestellte Leistung des Antriebsaggregats, beispielsweise durch Erhöhung der Drehzahl einer Brennkraftmaschine, erhöht wird. Allerdings verteilt sich diese erhöhte Leistung entsprechend der Leistungskopplung, insbesondere mechanischen oder hydraulischen Kopplung, auf vorgegebene Weise zwischen Stellaggregat für das Werkzeug und Vorschubaggregat. Die maximal für das Stellaggregat zur Verfügung stehende Leistung ist damit um den für das Vorschubaggregat abgezweigten Anteil vermindert.

Gemäß dem eingangs genannten Stand der Technik erfolgt eine Beeinflussung der Leistungsaufteilung durch eine Inchfunktion oder ein Inchpedal. Mit Betätigung des Inchpedals kann die für das Vorschubaggregat abgezweigte Leistung vermindert werden und entsprechend die für das Stellaggregat zur Verfügung stehende Leistung erhöht werden. Für den Fall, dass für die Inchfunktion ein zusätzliches Inchpedal in der Fahrgastzelle des Arbeitsfahrzeugs vorgesehen ist, bedarf die Betätigung dieses Inchpedals erhöhter Fertigkeiten des Fahrers des Arbeitsfahrzeugs. Des Weiteren wird das Fußbedienfeld durch die Notwendigkeit eines zusätzlichen Pedals verkompliziert. Eine vermeintliche Vereinfachung des Fußbedienfelds kann gemäß dem Stand der Technik dadurch erfolgen, dass das Inchpedal integral mit dem Bremspedal ausgebildet wird. Zwar können hierdurch zusätzliche Betätigungspedale für den Fuß des Fahrers für die Inchfunktion vermieden werden. Allerdings bedarf die Betätigung eines derartigen, in ein Bremspedal integrierten Inchpedals eine besonders feinfühlige und viel Erfahrung erfordernde Bedienung eines derartigen multifunktionalen Pedals, da über einen Betätigungsweg sensibel zwischen der Inchfunktion und der Bremsfunktion zu unterscheiden ist. Bei einer Fehlbedienung kann es zu Einbrüchen der Leistung für das Stellaggregat und/oder Einbrüchen der Antriebsleistung durch eine unerwünschte Bremswirkung kommen.

Diesen Erkenntnissen wird erfindungsgemäß dadurch Rechnung getragen, dass eine derartige Inchfunktion automatisiert ausgeführt wird, wobei die automatische Inchfunktion alleinig zur Wirkung kommen kann oder kumulativ zu einer Betätigung einer Inchfunktion durch den Fahrer selbst. Für eine derartige automatisierte Inchfunktion wird für aktiviertes Stellaggregat, also bei einem "HEBEN" oder "SENKEN" und/oder einem "KIPPEN" des Werkzeugs, die Beaufschlagung des Stellaggregats berücksichtigt. Eine derartige Berücksichtigung kann beispielsweise mit
- Erfassung eines Wegsignals des Werkzeugs,
- Erfassung eines Bewegungssignals des Werkzeugs,
- Kraftmessung im Kraftfluss von dem Werkzeug,
- Erfassung der Beladung des Werkzeugs,
- Erfassung einer Vorgabe durch den Fahrer,
- Erfassung einer Antriebsgröße des Stellaggregats und/oder
- Erfassung eines Arbeitsdrucks in einem hydraulisch ausgebildeten Stellaggregat, beispielsweise einem Hubzylinder,
erfolgen.

Je nach Beaufschlagung des Stellaggregats wird dann automatisiert in das Vorschubaggregat derart eingegriffen, dass die Vorschubleistung des Vorschubaggregats beeinflusst wird. Mit einer erhöhten Beaufschlagung des mindestens einen Stellaggregats, die mit einem erhöhten Leistungsbedarf für das Stellaggregat, insbesondere infolge einer besonders großen Last im Bereich des Werkzeugs, korreliert, kann damit automatisch die für das Vorschubaggregat von der Leistungsversorgung abgezweigte Leistung reduziert werden, so dass die für das Stellaggregat und damit für das Werkzeug zur Verfügung gestellte Leistung vergrößert werden kann. Hierbei kann die automatische Beeinflussung der Leistungsaufteilung zwischen Stellaggregat und Vorschubaggregat den Gegebenheiten Rechnung tragen, ohne dass hiermit der Fahrer beschäftigt werden muss. Weiterhin kann Art und Umfang der Beeinflussung durch geeignete konstruktive Maßnahmen unabhängig von den Fähigkeiten des Fahrers vorgegeben werden, wobei u. U. die Möglichkeiten der Beeinflussung auch gegenüber einem Fahrer mit sehr guten Möglichkeiten verbessert werden können.

Gemäß einem weiteren Vorschlag der Erfindung wird die Beaufschlagung des mindestens einen Stellaggregats mit einem Schwellwert verglichen. Überschreitet die Beaufschlagung den Schwellwert, erfolgt eine automatische Reduzierung der Vorschubleistung des Vorschubaggregats. Somit sind zwei unterschiedliche Betriebsbereiche gegeben:
a) Unterhalb des Schwellwerts ist die automatische Beeinflussung "deaktiviert", so dass das Verhalten des Arbeitsfahrzeugs an sich dem Verhalten des aus dem Stand der Technik bekannten Arbeitsfahrzeugs entspricht, so dass der Fahrer die übliche Kontrolle über das Arbeitsfahrzeug hat.
b) Für Beaufschlagungen des Stellaggregats oberhalb des Schwellwerts wird automatisch erkannt, dass besondere Betriebsbedingungen, besonders große Lasten und/oder ein Fehlverhalten des Fahrers vorliegt. In diesem Fall erfolgt gezielt der automatisierte Eingriff.

Für eine automatische Rücknahme der Vorschubleistung in Abhängigkeit der Beaufschlagung des mindestens einen Stellaggregats gibt es unterschiedliche Möglichkeiten:
- Die Rücknahme der Vorschubleistung kann proportional mit der Beaufschlagung des mindestens einen Stellaggregats erfolgen.
- Ebenfalls denkbar ist eine beliebige funktionale Abhängigkeit, wobei neben der Beaufschlagung des Stellaggregats auch weitere Betriebsparameter des Arbeitsfahrzeugs oder Umgebungsparameter in der funktionalen Abhängigkeit Berücksichtigung finden können.
- Ebenfalls möglich ist eine Rücknahme der Vorschubleistung nach Maßgabe eines zwei-oder mehrdimensionalen Kennfelds, welches beispielsweise a priori in Versuchsreihen ermittelt worden ist und in einem Steuergerät abgelegt sein kann.

Für eine besondere Ausgestaltung der Erfindung handelt es sich bei dem Stellaggregat um ein Hubaggregat, welches eine Bewegung erzeugt, die zumindest eine vertikale Komponente aufweist. Ebenfalls denkbar ist, dass das mindestens eine Stellaggregat, dessen Beaufschlagung berücksichtigt wird, als ein Kippaggregat für eine als Schaufel ausgebildetes Werkzeug ausgebildet ist, wobei ein Kippen einer Schaufel ebenfalls mit einer Veränderung der Höhe der Schaufel verbunden sein kann.

Ein anderes Problem stellt die Bewegung einer Vorderkante der Schaufel bei einem Verkippen auf einer Kreisbahn dar, so dass die Kippbewegung auch eine horizontale Bewegungskomponente erzeugt. Für in ein Hindernis eingefahrene Schaufel bedeutet diese horizontale Bewegungskomponente, dass mit dem Verkippen der Widerstand für das Stellaggregat erhöht wird, so dass ein erhöhter Leistungsbedarf besteht. Ebenfalls möglich ist, dass sowohl ein Hubaggregat als auch ein Kippaggregat für die automatische Beeinflussung der Vorschubleistung des Vorschubaggregats berücksichtigt werden. Für die Art der Berücksichtigung gibt es die Möglichkeit einer Berücksichtigung des kleineren Stellsignals von dem Stellsignal des Hubaggregats und dem Stellsignal des Kippaggregats oder eine beliebige, auch funktionale Verknüpfung der Stellsignale von Hubaggregat und Kippaggregat.

Für die erfindungsgemäße Ausgestaltung der Leistungsversorgung gibt es unterschiedliche Möglichkeiten. Beispielsweise kann die Leistungsversorgung als elektrische Energieversorgung ausgebildet sein, die begrenzt ist und beispielsweise genutzt werden muss für ein elektrisches Stellaggregat sowie ein elektrisches Vorschubaggregat. Ebenfalls möglich ist, dass die Leistungsversorgung als Brennkraftmaschine ausgebildet ist, die beispielsweise sowohl ein stufenlos oder gestuft verstellbares, als mechanisches Getriebe oder hydrostatisches Getriebe ausgebildetes Vorschubaggregat als auch ein Stellaggregat in Form einer Pumpe zwecks Bereitstellung eines Arbeitsdrucks für einen hydraulischen Hubkolben antreibt. Weitere beliebige Mischformen sind ebenfalls denkbar, beispielsweise der Einsatz einer Brennkraftmaschine zur Leistungsversorgung mit einer Umwandlung der erzeugten mechanischen Energie in elektrische oder hydraulische Energie mit alleinigem oder gemischtem mechanischem, hydraulischem oder elektrischem Antrieb von Vorschubaggregat und Stellaggregat, ggf. unter Zwischenschaltung von hydraulischen Leistungsübertragungen oder Wandlern zwischen den vorgenannten Leistungsformen.

Bei dem erfindungsgemäßen Arbeitsfahrzeug ist eine Überwachungseinrichtung vorgesehen, über die eine Berücksichtigung der Beaufschlagung des Stellaggregats erfolgt. Hierbei kann es sich beispielsweise um eine mit einer Steuer- oder Regelungseinheit verbundenen Sensor handeln, welcher die Beaufschlagung des Stellaggregats erfasst. Die Steuer- oder Regeleinrichtung kann dann geeignet auf das Vorschubaggregat einwirken. Bei alternativer Ausgestaltung kann die Überwachungseinrichtung als eine mechanische, hydraulische oder elektrische Kopplung zwischen Vorschubaggregat und Stellaggregat ausgebildet sein.

Die vorgenannte Überwachungseinrichtung ist mit einer Leistungsstelleinrichtung für die Einstellung der Vorschubleistung des Vorschubaggregats verbunden. Die Verbindung erfolgt derart, dass über die Leistungsstelleinrichtung die Vorschubleistung des Vorschubaggregats in Abhängigkeit der von der Überwachungseinrichtung erfassten Beaufschlagung mindestens eines Stellaggregats automatisiert beeinflussbar ist. Hierbei erfolgt die Beeinflussung derart, dass für eine Erfassung einer erhöhten Beaufschlagung des Stellaggregats durch die Überwachungseinrichtung über die Leistungsstelleinrichtung die Vorschubleistung des Vorschubaggregats reduziert wird, beispielsweise mit Überschreiten eines Schwellwerts, proportional, in funktionaler Abhängigkeit oder nach Maßgabe eines Kennfelds.

Eine besonders einfache Ausgestaltung eines Arbeitsfahrzeugs, die sich ohne große Adaptionen in ein hydraulisches Konzept eines Arbeitsfahrzeugs integrieren lässt und u. U. auch eine Nachrüstung bereits bestehender Fahrzeuge ermöglicht, ist gegeben, wenn das Stellaggregat, beispielsweise ein Hubaggregat und/oder ein Kippaggregat für eine Schaufel, als ein hydraulisches Stellaggregat ausgebildet ist und das Vorschubaggregat als hydrostatischer Fahrantrieb oder hydrostatisches Getriebe ausgebildet ist. In diesem Fall kann dem hydrostatischen Fahrantrieb ein Steuerdruck zugeführt werden, über den die Leistung des Vorschubaggregats auf einfache Weise verändert werden kann. Der Steuerdruck ist in diesem Fall mit dem Arbeitsdruck des hydraulischen Stellaggregats über hydraulische Bauelemente gekoppelt.

Um unerwünschte Eingriffe in die Vorschubleistung während eines Fahrbetriebs zu vermeiden und/oder gezielt die erfindungsgemäße Beeinflussung der Vorschubleistung in einem Betriebsbereich "Heben" und/oder "Kippen" zu beeinflussen, kann ein Schaltelement oder Ventil vorgesehen sein, welches die Kopplung des Arbeitsdrucks mit dem Steuerdruck beeinflusst oder aktiviert und deaktiviert.

Eine besonders einfache konkrete Ausgestaltung eines Arbeitsfahrzeugs ergibt sich, wenn der Arbeitsdruck des hydraulischen Stellaggregats einem Steuerventil als Steuerdruck zugeführt wird. In Abhängigkeit von dem Arbeitsdruck wird die Stellung des Steuerventils beeinflusst. Je nach Stellung des Steuerventils wird über dieses eine Entlastung einer Steuerdruckleitung herbeigeführt, welche mit dem Steuerdruck für das hydrostatische Getriebe beaufschlagt ist. Mit Entlastung der Steuerdruckleitung kann damit der Steuerdruck des hydrostatischen Fahrantriebs vermindert werden und eine automatisierte Verstellung des hydrostatischen Getriebes erfolgen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine vereinfachte Darstellung eines als Radlader ausgebildeten Arbeitsfahrzeugs, bei dem ein als Schaufel ausgebildetes Werkzeug in eine abzutragende Materialanhäufung eingefahren ist und eine Hubfunktion ausgeführt werden soll.
- **Fig. 2**: zeigt ein stark schematisiertes Blockaschaltbild eines erfindungsgemäßen Arbeitsfahrzeugs.
- **Fig. 3**: zeigt ein gegenüber Fig. 2 beispielhaft konkretisiertes schematisches Blockschaltbild für ein Arbeitsfahrzeug mit einem hydraulischen Stellaggregat.
- **Fig. 4**: zeigt ein gegenüber der Ausführungsform gemäß Fig. 2 konkretisiertes schematisches Blockschaltbild für ein Arbeitsfahrzeug mit einem hydraulischen Stellaggregat und einem hydraulisch mit dem Stellaggregat gekoppelten hydrostatischen Getriebe.

### FIGURENBESCHREIBUNG

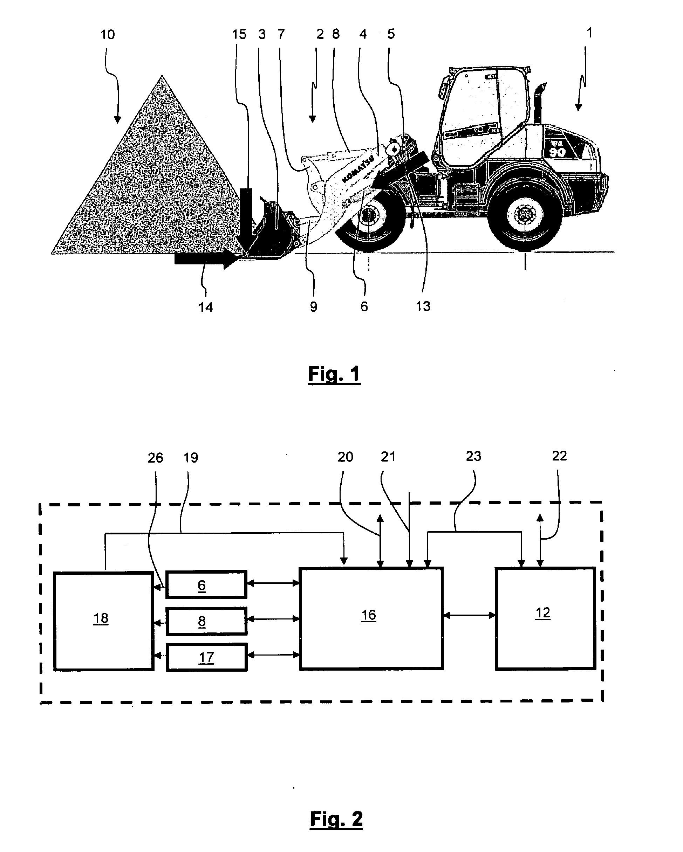

Fig. 1 zeigt ein Arbeitsfahrzeug 1, welches hier als Radlader ausgebildet ist. Das Arbeitsfahrzeug 1 besitzt ein Hubgerüst 2, über welches ein Werkzeug 3, hier eine Schaufel, betätigbar ist. Mit einer derartigen Betätigung kann die Höhe des Werkzeugs 3 sowie dessen Neigungswinkel selektiv oder gemeinsam nach Maßgabe des Fahrers des Arbeitsfahrzeugs 1 geändert werden. Das Hubgerüst 2 besitzt einen Werkzeugarm 4, der im Bereich einer Schwenkachse 5 verdrehbar gegenüber dem Arbeitsfahrzeug 1 gelagert ist. Im vorderen Endbereich des Werkzeugarms 4 ist an diesem das Werkzeug 3 ebenfalls verschwenkbar für eine Kippbewegung angelenkt. Eine Verschwenkung des Werkzeugarms 4 um die Schwenkachse 5 kann nach Maßgabe eines Stellaggregats 6 erfolgen, welches für das dargestellte Ausführungsbeispiel als Hubzylinder ausgebildet ist. Gegenüber dem Werkzeugarm 4 ist zwischen seinen Endbereichen verdrehbar ein Kipphebel 7 gelagert, der über ein Stellaggregat 8, hier ein hydraulischer Kippzylinder, verschwenkbar ist. Das Stellaggregat 8 ist drehbar an den dem Arbeitsfahrzeug zugewandten Endbereich des Kipphebels 7 angelenkt und stützt sich an dem Arbeitsfahrzeug 1 ab. In dem anderen Endbereich ist der Kipphebel 7 an einer Kippstange 9 angelenkt. Die Kippstange 9 ist in ihrem anderen Endbereich beabstandet von dem Anlenkpunkt des Werkzeugarms 4 an dem Werkzeug 3 angelenkt. Werkzeugarm 4, Stellaggregate 6, 8, Kipphebel 7 und Kippstange 9 sind Teil einer an sich bekannten Z-Kinematik. Gemäß Fig. 1 kann das Arbeitsfahrzeug in eine Materialanhäufung 10 eingefahren werden. Der Fahrer kann über einen Steuerblock 11 eine Umschaltung von einem Betrieb "FAHREN" zu einem Betrieb "HEBEN" und/oder "KIPPEN" veranlassen. Zur Erhöhung der von einer Leistungsversorgung 12 bereitgestellten Leistung kann über das Gaspedal die Drehzahl einer Brennkraftmaschine des Arbeitsfahrzeugs 1 erhöht werden. Zum Anheben des Werkzeugs 3 wird das Stellaggregat 6 mit Hydraulikdruck beaufschlagt, woraus eine Hubkraft 13 resultiert, die ein Drehmoment des Werkzeugarms 4 um die Schwenkachse 5 erzeugt. Neben der Erzeugung der Hubkraft 13 ist die Leistungsversorgung 12 für die Erzeugung einer Vorschubleistung verantwortlich, so dass im Bereich des Werkzeugs 3 einerseits eine horizontal orientierte Widerstandskraft 14 erzeugt wird entgegen dem Vorschub und andererseits die Gewichtskraft 15 des Werkzeugs 3 zuzüglich einer von dem Werkzeug 3 abgestützten Last. Weitere Kräfte können durch eine überlagerte Kippbewegung bei simultaner Betätigung des Stellaggregats 8 oder bei einem Kippen mit reiner Hubbewegung erzeugt werden, beispielsweise durch Verlagerungen der Last und/oder Bewegung des Werkzeugs 3 in einer nicht rein vertikalen Bewegung, sondern beispielsweise auf einer Kreisbahn. Die Erfindung betrifft eine Reduzierung einer Vorschubleistung zur Erhöhung der Leistung, die für das Stellaggregat 6 und/oder das Stellaggregat 8 zur Verfügung steht.

**Fig. 2** zeigt ein schematisches Blockschaltbild mit einer Leistungsversorgung 12. Die Leistung der Leistungsversorgung 12 wird über eine Leistungsstelleinrichtung 16 auf die Stellaggregate 6, 8 und ein Vorschubaggregat 17 aufgeteilt. Die Beaufschlagung des Stellaggregats 6 und/oder des Stellaggregats 8 und u. U. auch des Vorschubaggregats 17 wird erfasst durch eine Überwachungseinrichtung 18. Die Überwachungseinrichtung 18 erzeugt ein der Beaufschlagung entsprechendes Signal 19, welches der Leistungsstelleinrichtung 16 zugeführt wird. Wird in der Leistungsstelleinrichtung 16 erkannt, dass ein erhöhter Leistungsbedarf für ein Stellaggregat 6, 8 besteht, erfolgt eine vergrößerte Leistungszuteilung zu dem Stellaggregat 6, 8 bei entsprechender Minderung der Leistungszuteilung des Vorschubaggregats 17. Ebenfalls berücksichtigt werden können in der Leistungsstelleinrichtung 16 Signale 20, bei denen es sich um Betriebsparameter des Arbeitsfahrzeugs 1 handeln kann und/oder von dem Fahrer des Arbeitsfahrzeugs 1 erzeugte Signale, beispielsweise Pedalsignale wie das Signal eines Bremspedals und/oder eines Inchpedals, manuelle Hub- oder Kippanforderungen o. ä.. Weiterhin kann in der Leistungsstelleinrichtung 16 ein Umgebungssignal 21 Berücksichtigung finden, bei dem es sich beispielsweise um eine ermittelte Neigung des Untergrunds des Arbeitsfahrzeugs 1 handelt. Über ein Signal 22 kann vom Fahrer auf die Leistungsversorgung eingewirkt werden. Ebenfalls möglich ist, dass die Leistungsversorgung 12 und die Leistungsstelleinrichtung 16 über ein Signal 23 kommunizieren, beispielsweise die Leistungsstelleinrichtung 16 einen erhöhten Leistungsbedarf an die Leistungsversorgung 12 signalisiert.

Für die konstruktive Ausgestaltung des in Fig. 2 dargestellten Prinzips gibt es vielfältige Möglichkeiten:
- Beispielsweise können die dargestellten Komponenten elektrisch ausgeführt sein. In diesem Fall handelt es sich bei der Leistungsversorgung 12 um eine elektrische Leistungsversorgung. Die Leistungsstelleinrichtung 16 kann als Steuer- oder Regelungseinrichtung mit einem Prozessor ausgebildet sein. Die Stellaggregate 6, 8 und das Vorschubaggregat 17 können als elektrische Stellaggregate ausgebildet sein. Die Überwachungseinrichtung 18 kann als Sensor, beispielsweise für eine Kraft, einen Weg, eine Geschwindigkeit, eine Beschleunigung, eine elektrische Größe in dem Stellaggregat 6, 8 mit entsprechender Signalverarbeitung ausgebildet sein. Ebenfalls möglich ist, dass das Signal 20 Daten aus einem Speicher, beispielsweise ein Kennfeld, beinhaltet, welche von der Leistungsstelleinrichtung 16 unter Berücksichtigung von Signalen 19-23 verarbeitet werden für die Veränderung der Zuteilung der Leistung zu den Stellaggregaten 6, 8 und zu dem Vorschubaggregat 17.
- Ebenfalls möglich ist, dass die Leistungsversorgung 12 als Brennkraftmaschine des Arbeitsfahrzeugs 1 ausgebildet ist. In diesem Fall kann die Brennkraftmaschine beispielsweise ein hydrostatisches Getriebe mit einer Hydropumpe und einem Hydromotor antreiben und andererseits mindestens eine Pumpe antreiben, die für die Erzeugung eines Arbeitsdrucks in als Hubzylinder ausgebildeten Stellaggregaten 6, 8 verantwortlich ist. Über hydraulische Bauelemente kann die Leistungsverzweigung einerseits auf das hydrostatische Getriebe und andererseits die Stellaggregate 6, 8 beeinflusst werden. Bei der Überwachungseinrichtung 18 handelt es sich in diesem Fall bspw. um eine Erfassung des Arbeitsdrucks in den als Hubzylinder ausgebildeten Stellaggregaten 6, 8, welcher mit der Last im Bereich des Werkzeugs 3 und dem Leistungsbedarf korreliert.
- Ebenfalls möglich sind mechanische Ausführungsformen oder Kombinationen der zuvor erläuterten Grundprinzipien, beispielsweise eine Aufteilung der Leistung einer Brennkraftmaschine auf elektrische Aggregate, hydraulische Aggregate u. ä..

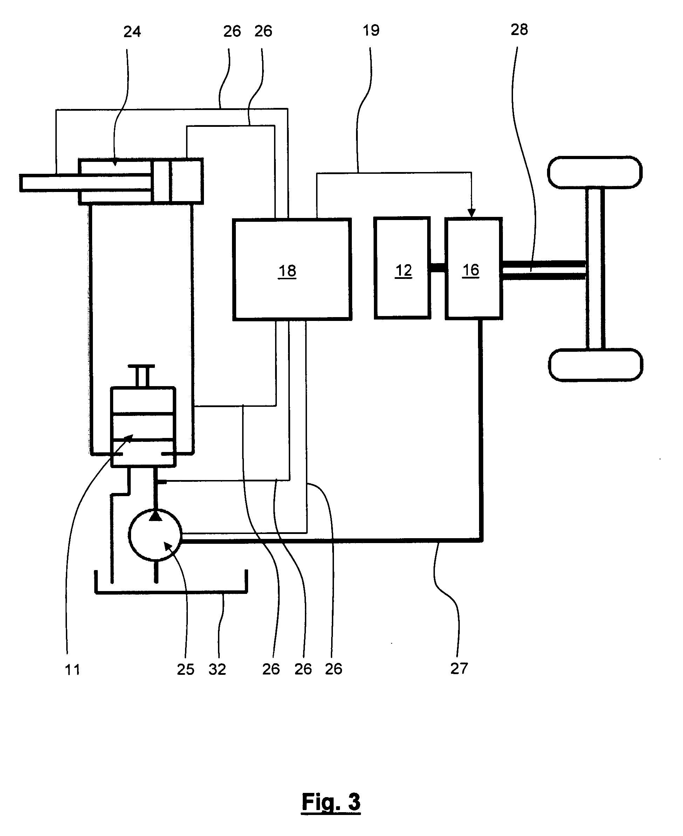

**Fig. 3** zeigt eine erste detailliertere Ausgestaltung des in Fig. 2 dargestellten Grundprinzips. Hierbei ist das Stellaggregat 6 als Hubaggregat 24 oder Hubzylinder ausgebildet. Der Arbeitsdruck in dem Hubaggregat 24 wird von einer Pumpe 25 bereitgestellt. Zwischen Pumpe 25 und Hubaggregat 24 ist der Steuerblock 11 zwischengeschaltet, über den vom Fahrer unterschiedliche Betriebsbereiche "FAHREN", "HEBEN" und "KIPPEN" vorgegeben werden können. Als Signale 26 einer Überwachungseinrichtung 18 können alternativ oder kumulativ folgende Möglichkeiten genutzt werden:
- In einer Kolbenstange des Hubaggregats 24 wird eine Kraft, ein Weg, eine Geschwindigkeit oder eine Beschleunigung sensiert und in ein Signal 26 umgewandelt.
- In einer Arbeitskammer wird über einen Drucksensor ein Arbeitsdruck ermittelt, der als Signal 26 der Überwachungseinrichtung 18 zugeführt wird.
- In einer Zuleitung zu dem Hubaggregat 24 kann als Signal 26 ein Druck erfasst werden.
- Ebenfalls erfasst werden kann der Druck in einer Leitung zwischen der Pumpe 25 und dem Steuerblock 11.
- Schließlich kann ein Signal über den Betriebszustand der Pumpe 25 als Signal 26 der Überwachungseinrichtung 18 zugeführt werden.

Die Leistungsversorgung 12 ist beispielsweise mit einer Brennkraftmaschine gebildet, die die Leistung zentral der Leistungsstelleinrichtung 16 zuführt, wo die Leistung verzweigt in einen Leistungszweig 27, der zu der Pumpe 25 führt, sowie einen Leistungszweig 28, der zu den Fahrzeugrädern führt. Zur Bestimmung der Leistungsverteilung wird in der Leistungsstelleinrichtung 16 das Signal 19 der Überwachungseinrichtung 18 berücksichtigt, welches wiederum von dem mindestens einen Signal 26 abhängig ist.

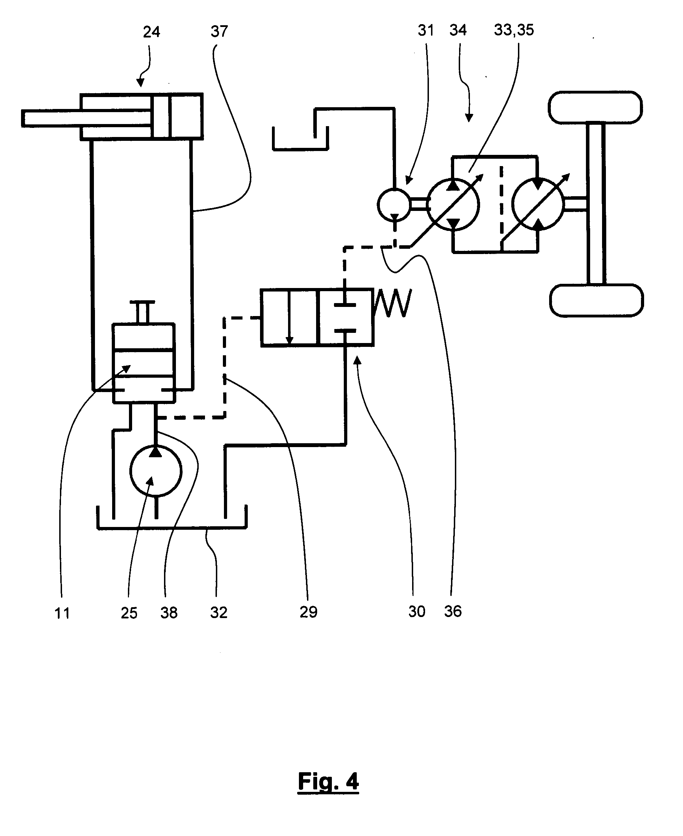

Gemäß Fig. 4 sind die Bauelemente 18, 12, 16 in Form hydraulischer Bauelemente ausgebildet. Ein Arbeitsdruck in der Arbeitsdruckleitung 38 zwischen der Pumpe 25 und dem Steuerblock 11 wird über eine Steuerdruckleitung 29 einem Steuerventil 30 zugeführt, welches in Fig. 4 schematisch als 2/2-Wegeventil dargestellt ist. Infolge einer Federbelastung des Steuerventils 30 befindet sich das Steuerventil 30 ohne anliegenden Steuerdruck der Steuerdruckleitung 29 oder unterhalb eines Schwellwerts in der skizzierten Sperrstellung, während mit einem Anstieg des Steuerdrucks in der Steuerdruckleitung 29 das Steuerventil 30 in eine Durchgangs-Betriebsstellung verbracht wird. Das Steuerventil 30 ist zwischen eine Pumpe 31 und einen Tank 32 zwischengeschaltet. Über den Druck der Pumpe 31 wird die Leistung eines hydrostatischen Getriebes 33 beeinflusst, indem über den erzeugten Druck in einer Steuerdruckleitung 36 die Förderleistung einer Hydropumpe 34 beeinflussbar ist. Die Pumpen 25, 31 sowie das hydrostatische Getriebe 33 werden von einem zentralen Antriebsaggregat, insbesondere einer Brennkraftmaschine, angetrieben.

Die Funktionsweise des in Fig. 4 dargestellten schematischen Aufbaus ist wie folgt: der Steuerdruck in der Steuerdruckleitung 29 korreliert mit dem Arbeitsdruck in dem Hubaggregat 24 und dem ausgangsseitig an der Pumpe 25 vorliegenden Druck. Mit zunehmender Belastung des Hubaggregats 24, also zunehmender Last an dem Werkzeug 3, beispielsweise im Zuge einer Hubbewegung, steigt somit der Steuerdruck 29 des Steuerventils 30. Das Steuerventil 30 bildet somit eine Überwachungseinrichtung 18 für die Beaufschlagung des Hubaggregats 24. Gleichzeitig ist das Steuerventil 30 Bestandteil einer Leistungsstelleinrichtung 16, da mit Überschreiten eines kritischen Steuerdrucks 29 das Steuerventil (teilweise) in eine Öffnungsstellung verbracht werden kann, für die die Pumpe 31 in den Tank 32 fördert, so dass der in der Steuerdruckleitung 36 anliegende Druck zur Vorgabe der Förderleistung der Hydropumpe 34 verringert wird. Hierdurch erfolgt eine "automatische" Leistungsanpassung für die Leistungszuteilung zu den Fahrzeugrädern des Arbeitsfahrzeugs 1.

In Fig. 4 ist das Steuerventil 30 symbolartig als "digitales" Ventil dargestellt, welches für ein Überschreiten eines Öffnungsdrucks durch den Steuerdruck 29 von einer Sperrstellung in eine Öffnungsstellung verbracht wird. Selbstverständlich kann das Steuerventil eine beliebige, kontinuierliche Öffnungscharakteristik aufweisen und beispielsweise als Steuerschieber ausgebildet sein, bei dem ein Öffnungsquerschnitt kontinuierlich vergrößert wird. Beispielsweise beträgt der Arbeitsdruck für das Hubaggregat 24 maximal 250 bar. Das Steuerventil 30 kann für einen Druck von ca. 20 bar unterhalb des Maximaldrucks in der Sperrstellung gemäß Fig. 4 verbleiben, während in Annäherung an den maximalen Druck von 230 bis 250 bar das Steuerventil 30 allmählich geöffnet wird. Zum weiteren Aufbau eines hydrostatischen Getriebes und dessen Steuerung wird auf die eingangs genannten Druckschriften verwiesen.

### BEZUGSZEICHENLISTE

- 1: Arbeitsfahrzeug
- 2: Hubgerüst
- 3: Werkzeug
- 4: Werkzeugarm
- 5: Schwenkachse
- 6: Stellaggregat
- 7: Kipphebel
- 8: Stellaggregat
- 9: Kippstange
- 10: Materialanhäufung
- 11: Steuerblock
- 12: Leistungsversorgung
- 13: Hubkraft
- 14: Widerstandskraft
- 15: Gewichtskraft
- 16: Leistungsstelleinrichtung
- 17: Vorschubaggregat
- 18: Überwachungseinrichtung
- 19: Signal
- 20: Signal
- 21: Umgebungssignal
- 22: Signal
- 23: Signal
- 24: Hubaggregat
- 25: Pumpe
- 26: Signal
- 27: Leistungszweig
- 28: Leistungszweig
- 29: Steuerdruck
- 30: Steuerventil
- 31: Pumpe
- 32: Tank
- 33: hydrostatisches Getriebe
- 34: Hydropumpe
- 35: Vorschubaggregat
- 36: weitere Steuerdruckleitung
- 37: Arbeitsdruckleitung
- 38: Arbeitsdruckleitung

## Patentansprüche

1. Verfahren zum Betrieb eines Arbeitsfahrzeugs (1) mit einem verstellbaren Vorschubaggregat (35) und mindestens einem Stellaggregat (6, 8) für ein Werkzeug (3), insbesondere eine Schaufel, wobei das Vorschubaggregat (35) und das Stellaggregat (6, 8) eine gemeinsame Leistungsversorgung (12) besitzen,
**dadurch gekennzeichnet, dass**
für das aktivierte Stellaggregat (6, 8) die Vorschubleistung des Vorschubaggregats (35) automatisch unter Berücksichtigung der Beaufschlagung des mindestens einen Stellaggregats (6, 8) beeinflusst wird.

2. Verfahren nach Anspruch 1, **dadurch gekennzeichnet, dass** die Vorschubleistung reduziert wird, wenn die Beaufschlagung des mindestens einen Stellaggregats (6, 8) einen Schwellwert überschreitet.

3. Verfahren nach Anspruch 1 oder 2, **dadurch gekennzeichnet, dass** eine Reduzierung der Vorschubleistung
a) proportional,
b) in funktionaler Abhängigkeit oder
c) nach Maßgabe eines Kennfelds
in Abhängigkeit der Beaufschlagung des mindestens einen Stellaggregats (6, 8) erfolgt.

4. Verfahren nach einem der Ansprüche 1 bis 3, **dadurch gekennzeichnet, dass** das mindestens eine Stellaggregat (6, 8) ein Hubaggregat (24) und/oder ein Kippaggregat für ein als Schaufel ausgebildetes Werkzeug (3) ist.

5. Verfahren nach Anspruch 4, **dadurch gekennzeichnet, dass** zur Beeinflussung der Vorschubleistung von einem Stellsignal des Hubaggregats (24) und einem Stellsignal des Kippaggregats das kleinere Stellsignal berücksichtigt wird.

6. Arbeitsfahrzeug mit einem Vorschubaggregat (35) und mindestens einem Stellaggregat (6, 8) für ein Werkzeug (3), insbesondere für eine Schaufel, wobei das Vorschubaggregat (35) und das Stellaggregat (6, 8) über eine gemeinsame Leistungsversorgung (12) mit Leistung versorgt werden, **dadurch gekennzeichnet, dass**
a) eine Überwachungseinrichtung (18) vorgesehen ist, die eine Beaufschlagung mindestens eines Stellaggregats (6, 8) erfasst,
b) die Überwachungseinrichtung (18) mit einer Leistungsstelleinrichtung (16) für die Einstellung der Vorschubleistung des Vorschubaggregats (35) verbunden ist und
c) über die Leistungsstelleinrichtung (16) die Vorschubleistung des Vorschubaggregats (35) in Abhängigkeit der von der Überwachungseinrichtung (18) erfassten Beaufschlagung mindestens eines Stellaggregats (6, 8) automatisiert beeinflussbar ist.

7. Arbeitsfahrzeug nach Anspruch 6, **dadurch gekennzeichnet, dass**
a) das Stellaggregat (6) ein hydraulisches Stellaggregat (Hubaggregat 24) ist,
b) das Vorschubaggregat (35) als hydrostatisches Getriebe (33) ausgebildet ist und
c) dem hydrostatischen Getriebe (33) über eine Steuerdruckleitung (36) ein Steuerdruck zugeführt ist, nach Maßgabe dessen die Vorschubleistung des hydrostatischen Getriebes (33) veränderbar ist und
d) eine mit dem Arbeitsdruck des Stellaggregats (6, 8) beaufschlagte Arbeitsdruckleitung (37; 38) über hydraulische Bauelemente (Steuerdruckleitung 29, Steuerventil 30) mit der Steuerdruckleitung (36) des hydrostatischen Getriebes (33) gekoppelt ist.

8. Arbeitsfahrzeug nach Anspruch 6 oder 7, **dadurch gekennzeichnet, dass** ein Schaltelement oder Ventil (Steuerblock 11) vorgesehen ist, welches die Kopplung einer mit dem Arbeitsdruck des Stellaggregats (6, 8) beaufschlagten Arbeitsdruckleitung (37; 38) mit der Steuerdruckleitung (36) für das hydrostatische Getriebe (33) je nach einem Betriebsbereich "HEBEN", "KIPPEN" oder "FAHREN" beeinflusst.

9. Arbeitsfahrzeug nach einem der Ansprüche 6 bis 8, **dadurch gekennzeichnet, dass** eine mit dem Arbeitsdruck des Stellaggregats (6, 8) beaufschlagte Arbeitsdruckleitung (37; 38) mit einer Steuerdruckleitung (29) eines Steuerventils (30) hydraulisch gekoppelt ist, wobei in Abhängigkeit von dem Steuerdruck in der Steuerdruckleitung (29) die Stellung des Steuerventils (30) beeinflussbar ist und je nach Stellung des Steuerventils (30) eine Entlastung der Steuerdruckleitung (36) herbeiführbar ist, welche mit dem Steuerdruck für das hydrostatische Getriebe (33) beaufschlagt ist.
